# EUROPEAN PATENT SPECIFICATION

(11) **EP 2 061 264 B1**
(45) Date of publication and mention of the grant of the patent: **25.12.2013**
(21) Application number: 07721155.5
(22) Date of filing: 16.05.2007
(51) Int. Cl.: H04W 76/02, H04L 12/46

(54) **A METHOD AND SYSTEM FOR ACQUIRING THAT SGSN HAS STARTED SINGLE TUNNEL BY GGSN IN A PACKET DOMAIN**
VERFAHREN UND SYSTEM ZUM BESTIMMEN, DASS SGSN EINEN EINZELTUNNEL DURCH GGSN IN EINER PAKETDOMÄNE GESTARTET HAT
PROCÉDÉ D'ACQUISITION D'INFORMATION CONCERNANT LE DÉMARRAGE À LA CHARGE DE SGSN D'UN TUNNEL SIMPLE PAR GGSN

(30) Priority: 18.08.2006 CN 200610112459
(43) Date of publication of application: 20.05.2009
(73) Proprietor: ZTE Corporation, Guangdong Province 518057 (CN)
(72) Inventor: ZHU, Jinguo, Shenzhen, Guangdong 518057 (CN); CAI, Jiannan, Shenzhen, Guangdong 518057 (CN); LIU, Xiliang, Shenzhen, Guangdong 518057 (CN)
(74) Representative: Gray, John James
(86) International application number: PCT/CN2007/001582
(87) International publication number: WO 2008/022518

(56) References cited:
- EP-A1- 2 037 633
- CN-A- 1 429 465
- CN-A- 1 434 612
- 3GPP-STANDARDS, 2500 WILSON BOULEVARD, SUITE 300, ARLINGTON, VIRGINIA 22201 USA, 31 July 2006 (2006-07-31), XP040278795,
- "Digital cellular telecommunications system (Phase 2+); Universal Mobile Telecommunications System (UMTS); General Packet Radio Service (GPRS); Service description; Stage 2 (3GPP TS 23.060 version 6.13.0 Release 6); ETSI TS 123 060", ETSI STANDARDS, LIS, SOPHIA ANTIPOLIS CEDEX, FRANCE, vol. 3-SA2, no. V6.13.0, 1 June 2006 (2006-06-01), XP014034199, ISSN: 0000-0001

## Description

### Technical Field

The present invention relates to a packet domain in the third generation mobile communication system, and more particularly to a method and system for acquiring that SGSN has started a direct tunnel by GGSN in a packet domain.

### Technical Background

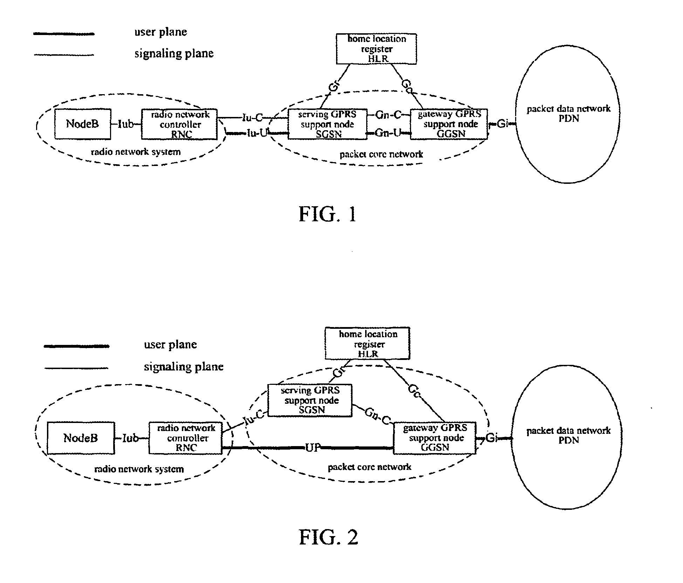

General packet radio service (GPRS) is a second generation mobile communication network based on packet switching, and its relevant standards are established by European Telecommunication Standards Institute (ETSI). In the third generation mobile communication system, GPRS evolves as a universal mobile telecommunication system packet switch (UMTS PS) domain. As shown in Fig. 1, the network architecture for UMTS PS in prior art is provided. The network architecture comprises the following network elements:
a nodeB for providing air connection for a terminal;
a radio network controller (RNC) mainly used for managing radio resource and controlling the nodeB, wherein both the nodeB and the radio network controller are generally called as a radio network system (RNS), the RNC is connected to the nodeB by an Iub port, and a terminal is connected to a packet core network of the UMTS;
a serving GPRS support node (SGSN) used for storing position information of routing area of a user and being in charge of safety and access control, wherein the SGSN is connected to the radio network system by an Iu port, and the Iu port comprises an Iu-C port and an Iu-U port;
a gateway GPRS support node (GGSN) used for allocating IP addresses to the terminals and acting as a gateway to an external network, wherein the GGSN is internally connected to the SGSN by a Gn-C port and a Gn-U port;
a home location register (HLR) used for storing contract data for the users and their current SGSN address, wherein the HLR is connected to the SGSN by a Gr port and to the GGSN by a Gc port;
a packet data network (PDN) used for providing a packet-based service network for the users, wherein the PDN is connected to the GGSN by a Gi port.

The transmitted data in Fig. 1 is divided into two kinds, the data for user plane and the data for signaling plane. User plane is mainly used for transmitting service data for the user, and signaling plane is mainly used for managing user plane, including establishing, releasing and modifying the user plane. A user plane path from a user equipment (UE) to the PDN in the UMTS PS system passes through 3 network elements: the RNC, the SGSN and the GGSN. Accordingly, there are two tunnels: one from the RNC to the SGSN and the other from the SGSN to the GGSN. So this is called as a double-tunnel scheme. Both of the tunnels are based on GPRS tunneling protocol (GTP) and also called as a GTP-U tunnel.

With progressive development of IP multimedia subsystem (IMS) service and extension of other multimedia services, the services have increasingly high requirements for delay and performance of transport layer. Thus the Third Generation Partnership Project (SGPP) organization is making a study of separating the SGSN from the user plane path as an individual network element of signaling plane.

The document "3GPP-STANDARDS, 2500 WILSON BOULEVARD, SUITE 300, ARLINGTON, VIRGINIA 22201 USA, XP040278795" discloses a description of an architecture that uses direct tunneling of user plane data between the RNC and the GGSN, which is known as One Tunnel approach. User plane only comprises one tunnel: the GTP-U tunnel from the RNC to the GGSN directly. This is called a direct-tunnel scheme, as shown in Fig. 2.

Compared with the double-tunnel scheme, the direct-tunnel scheme is more beneficial to the transmission of multimedia service due to one node fewer in user plane, and thus data delay is smaller. However, sometimes the double-tunnel scheme is required, especially when the SGSN needs to know the condition of the data for user plane, such as when the user roams and needs to go to the GGSN to which it belongs, when user plane needs to be monitored legally by the SGSN, when the user has intelligent service and when the GGSN does not support a direct-tunnel scheme, the SGSN determines whether to use the direct-tunnel scheme or the double-tunnel scheme.

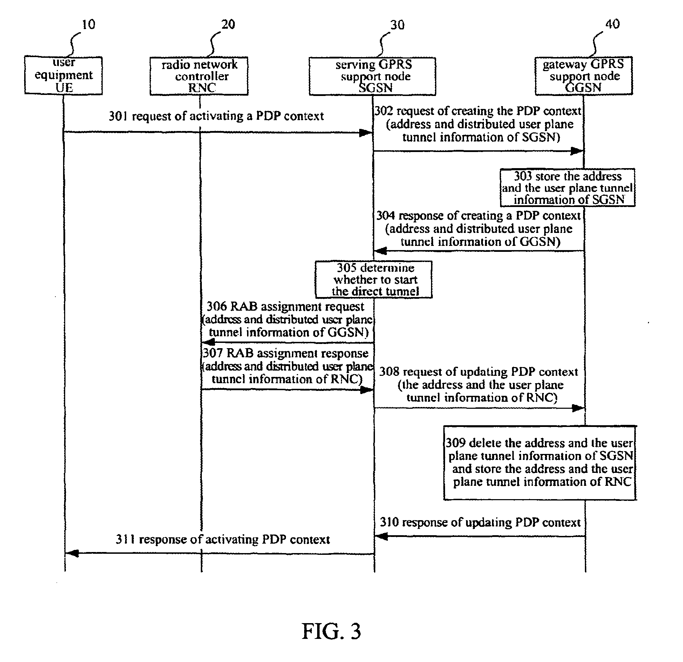

As shown in Fig. 3, a process of establishing a direct tunnel according to the present specification is described, the process comprises the following steps:
step 301: terminal UE 10 initiates a request of activating a packet data protocol (PDP) context to SGSN 30 by RNC 20;
step 302: SGSN 30 obtains an address of GGSN 40 after examining a signed contract. SGSN 30 distributes user plane tunnel information, and then initiates a request of creating the PDP context with the address and the distributed user plane tunnel information of SGSN 30 to GGSN 40;
step 303: GGSN 40 stores the address and the user plane tunnel information of SGSN 30 to create PDP context after creating the PDP context request;
step 304: GGSN 40 distributes its user plane tunnel information, and sends the information along with the address of GGSN 40 to SGSN 30 in the response of creating a PDP context;
step 305: SGSN 30 stores the address and the user plane tunnel information of GGSN 40, and then determines whether to use the direct-tunnel scheme. In the cases that the user is roaming, legal interception is required, and the user is an intelligent user and so on, the double-tunnel scheme is required;
step 306: if SGSN 30 decides to use the direct-tunnel scheme, then a radio access bearer (RAB) assignment process is initiated to indicate RNC 20 to establish radio bearer. SGSN 30 sends a RAB assignment request message with the address and the user plane tunnel information of GGSN 40 to RNC 20;
step 307: RNC 20 knows the address and the user plane tunnel information of GGSN 40 after receiving the RAB assignment request message. RNC 20 continues to complete the RAB assignment process and distributes tunnel numbers of RNC 20. After this has been done, an RAB assignment response with the address and the distributed user plane tunnel information of RNC 20 is returned to SGSN 30.
step 308: SGSN 30 determines that the direct-tunnel scheme has been started, and sends the address and the user plane tunnel information of RNC 20 in the request message of updating PDP context to GGSN 40;
step 309: after received by GGSN 40, the address and the user plane tunnel information of RNC 20 will replace the previously stored address and user plane tunnel information of SGSN 30. Thus the GTP-U tunnel between RNC 20 and GGSN 40 is established;
step 310: GGSN 40 returns the response of updating PDP context to SGSN 30;
step 311: SGSN 30 returns the response of activating PDP context to terminal UE 10 to activate PDP context successfully.

In the direct-tunnel scheme described above, since a modification is not required in creating and updating a PDP context message, the scheme does not have any impact on GGSN 40, and GGSN 40 does not need to be upgraded. However, there is one problem in the scheme: GGSN 40 is unable to know whether SGSN 30 has used the direct-tunnel scheme or it still uses the double-tunnel scheme. In some cases this must be known, for example, when GGSN 40 processes an error indication message for user plane, GGSN 40 must know whether this error indication message comes from RNC 20 (for the direct-tunnel scheme) or from SGSN 30 (for the double-tunnel scheme). GGSN 40 has different processing methods for these two cases.

Therefore, there is a need for a solution that modifies the request message of updating PDP context so that GGSN 40 can know whether SGSN 30 has started the direct tunnel.

The document EP2037633A1 discloses a processing method on an invalidation of a downlink data tunnel between networks is provided, which includes the following steps: a core network user plane anchor receives an error indication of data tunnel sent from an access network device; after deciding that the user plane corresponding to the error indication uses a One Tunnel technology, the core network user plane anchor notifies a relevant core network control plane to request recovering the downlink data tunnel; and the core network control plane recovers the downlink data tunnel and notifies the core network user plane anchor to update information of the user plane. The processing method can improve the speed of recovering data transmission after the invalidation of the downlink data tunnel.

### Summary of the Invention

A technical problem to be solved by the present invention is to provide a method and system for acquiring that SGSN has started direct tunnel by GGSN in a packet domain so as to eliminate the disadvantage that the gateway GPRS support node is unable to know whether the serving GPRS support node has started the direct tunnel in prior art.

In order to solve the technical problem described above, the present invention first provides a method for acquiring that the SGSN has started a direct tunnel by GGSN in a packet domain, and the method is applied to the third generation mobile communication system including terminals, radio network controller (RNC), serving GPRS support node (SGSN) and gateway GPRS support node (GGSN), wherein the method comprises the following steps:
setting mark: in a tunnel establishing process, setting a direct-tunnel mark in a request message of updating packet data protocol context sent to the gateway GPRS support node to indicate whether a serving GPRS support node has started the direct tunnel if the serving GPRS support node has started a direct-tunnel scheme;
determining mark: determining the presence of the mark indicating that the serving GPRS support node has started the direct tunnel and acquiring the address and user plane tunnel information of the radio network controller included in the request message of updating packet data protocol context if the gateway GPRS support node determines that the received request message of updating packet data protocol context has the direct-tunnel mark;characterized in that, the step of setting mark comprises setting different values of the direct-tunnel mark according to whether the user plane tunnel information of the double tunnels is deleted or reserved if the serving GPRS support node has started the direct tunnel.

Further, in the method described above, the step of determining mark comprises determining the value of the direct-tunnel mark, wherein if the value of the direct-tunnel mark indicates that the serving GPRS support node has deleted the user plane tunnel information of the double tunnels, then the gateway GPRS support node deletes the stored user plane tunnel information of the serving GPRS support node; and if the value of the direct-tunnel mark indicates that the serving GPRS support node has reserved the user plane tunnel information of the double tunnels, then the gateway GPRS support node reserves the stored address and user plane tunnel information of the serving GPRS support node.

Further, in the method described above, after the step of determining mark, when the serving GPRS support node has started the direct tunnel and reserved the user plane tunnel information of the double tunnels, the gateway GPRS support node receives and processes an error indication sent by the radio network controller.

Further, in the method described above, the step of the gateway GPRS support node receiving and processing the error indication sent by the radio network controller further comprises:
step 51: the gateway GPRS support node sends a downlink packet to the radio network controller by a GTP-U tunnel;
step 52: if abnormity occurs in the radio network controller and the corresponding context cannot be found, the radio network controller returns an error indication called the first error indication to the gateway GPRS support node;
step 53: the gateway GPRS support node receives the first error indication returned by the radio network controller, deletes the address and the user plane tunnel information of the radio network controller, and utilizes the address and the user plane tunnel information of the serving GPRS support node.

Further, after the step 53, the method described above further comprises:
step 61: the gateway GPRS support node receives the downlink packet again and sends it to the serving GPRS support node, then the serving GPRS support node forwards the downlink packet to the radio network controller;
step 62: if abnormity occurs in the radio network controller and the corresponding radio access bearer cannot be found, the radio network controller returns an error indication called the second error indication to the serving GPRS support node;
step 63: the gateway GPRS support node receives the second error indication returned by the radio network controller, deletes the radio access bearer and reserves packet data protocol context.

In addition, the present invention also provides a third generation mobile communication system for acquiring that SGSN has started direct tunnel by GGSN in a packet domain. The third generation mobile communication system comprises terminals, radio network controller (RNC), serving GPRS support node (SGSN) and gateway GPRS support node (GGSN), wherein a mark setting module is added in the serving GPRS support node, and a mark determining module is added in the gateway GPRS support node, wherein:

The mark setting module in the serving GPRS support node is used for setting a direct-tunnel mark in a request message of updating packet data protocol context sent to the gateway GPRS support node after starting the direct-tunnel scheme in the tunnel establishing process to indicate whether the serving GPRS support node has started the direct tunnel;

The mark determining module in the gateway GPRS support node is used for determining whether the received request message of updating packet data protocol context has the direct-tunnel mark, and if yes, indicating that the serving GPRS support node has started the direct tunnel;
characterized in that, the mark setting module in the serving GPRS support node further sets different values of the direct-tunnel mark according to whether the serving GPRS support node has deleted or reserved the user plane tunnel information of the double tunnels.

Further, in the system according to the present invention, the mark determining module in gateway GPRS support node determines whether the serving GPRS support node has deleted the user plane tunnel information of the double tunnels according to the value of the direct-tunnel mark.

According to the present invention, a direct-tunnel mark which indicates whether the serving GPRS support node has started the direct tunnel is set in the request message of updating packet data protocol context. When the gateway GPRS support node receives the request message of updating packet data protocol context, the gateway GPRS support node determines that the serving GPRS support node has started the direct tunnel if the request message of updating packet data protocol context has the direct-tunnel mark.

Furthermore, according to the present invention, whether the serving GPRS support node reserves the previously distributed user plane tunnel information can be determined through the direct-tunnel mark.

### Brief Description of the Drawings

Fig. 1 is a double-tunnel system architecture diagram of UMTS/GPRS in prior art;
Fig. 2 is a direct-tunnel system architecture diagram of UMTS/GPRS in prior art;
Fig. 3 is a diagram of user plane establishing process of the direct-tunnel scheme in prior art;
Fig. 4 is one embodiment of a process of establishing a direct tunnel in accordance with the invention;
Fig. 5 is one embodiment of a processing procedure when GGSN receives an error indication in accordance with the invention.

### Preferred Embodiments of the Invention

The present invention is described below in combination with the figures and the specific embodiments, which are not intended to limit the present invention.

Still as shown in Fig. 2, the third generation mobile communication system according to the present invention comprises terminals, radio network controller (RNC), serving GPRS support node (SGSN) and gateway GPRS support node (GGSN). In order to acquire that the SGSN has started a direct tunnel by the GGSN in a packet domain, a mark setting module needs to be added in the SGSN, and a mark determining module is set in the GGSN, wherein:
the mark setting module in the SGSN is used for setting a direct-tunnel mark in a request message of updating PDP context sent to the GGSN after starting a direct-tunnel scheme in the tunnel establishing process to indicate whether the SGSN has started the direct tunnel, and setting different values of the direct-tunnel mark according to whether the SGSN has deleted or reserved user plane tunnel information of double tunnels;
the mark determining module in the GGSN is used for determining whether the received request message of updating PDP context has the direct-tunnel mark, and if yes, indicating that the SGSN has started the direct tunnel; further, determining whether the SGSN has deleted the user plane tunnel information of the double tunnels according to the value of the direct-tunnel mark, and informing a service processing module of the GGSN.

The service processing module of the GGSN obtains an address and user plane tunnel information of the RNC included in the request message of updating PDP context after knowing that the SGSN has started the direct tunnel, deletes user plane tunnel information of the SGSN stored locally when knowing that the SGSN has deleted the user plane tunnel information of the double tunnels, and reserves the address and the user plane tunnel information of the SGSN stored locally when knowing that the SGSN has reserved the user plane tunnel information of the double tunnels, that is, at this time the GGSN reserves the addresses and the user plane tunnel information of both the SGSN and the RNC.

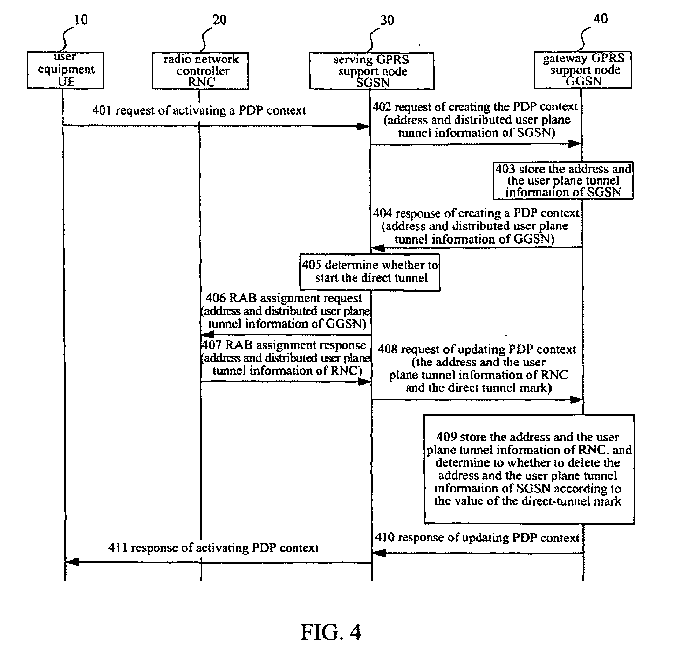

As shown in Fig. 4, one embodiment of process of establishing a direct tunnel in accordance with the invention is provided. In this embodiment, the GGSN can know whether the SGSN has started the direct tunnel.

A direct-tunnel mark which indicates whether SGSN 30 has started the direct tunnel is added in the request message of updating PDP context.

When GGSN 40 receives the request message of updating PDP context, GGSN 40 determines that SGSN 30 has started the direct tunnel if the received message has the direct-tunnel mark. Then GGSN 40 knows that the address and user plane tunnel information of the RNC 20 are included in the request message of updating PDP context.

Further, if the direct-tunnel mark indicates that the direct tunnel has been started, the direct-tunnel mark also indicates whether user plane tunnel information of double tunnels is stored in SGSN 30, and GGSN 40 determines whether to reserve or delete the previously stored user plane tunnel information of SGSN 30 according to the direct-tunnel mark.

According to the above description, if the direct tunnel has been started, then the request message of updating PDP context has the direct-tunnel mark; furthermore, the direct-tunnel mark can determine whether SGSN 30 reserves the previously distributed user plane tunnel information. The establishing process comprises the following steps:
step 401: terminal UE 10 initiates a request of activating a packet data protocol (PDP) context to SGSN 30 through RNC 20;
step 402: SGSN 30 obtains an address of GGSN 40 after examining a signed contract. SGSN 30 distributes user plane tunnel information, and then initiates a request of creating the PDP context with the address and the distributed user plane tunnel information of SGSN 30;
step 403: GGSN 40 stores the address and the user plane tunnel information of SGSN 30 to create PDP context after creating the PDP context request;
step 404: GGSN 40 distributes its user plane tunnel information, and sends the information along with the address of GGSN 40 to SGSN 30 in the response of creating a PDP context;
step 405: SGSN 30 stores the user plane tunnel information of GGSN 40, and then determines whether to use the direct tunnel. In the cases that user is roaming, monitoring legally is required, and the user is intelligent user, the double-tunnel scheme is required;
step 406: if SGSN 30 decides to use the direct-tunnel scheme, then a radio access bearer (RAB) assignment process is initiated to indicate RNC 20 to establish radio bearer. SGSN 30 sends the address and the user plane tunnel information of GGSN 40 in a RAB assignment request message to RNC 20;
step 407: RNC 20 knows the address and the user plane tunnel information of GGSN 40 after receiving the RAB assignment request message. RNC 20 continues to complete the RAB assignment process and distributes tunnel numbers of RNC 20. After this has been done, an RAB assignment response with the address and the distributed user plane tunnel information of RNC 20 is returned to SGSN 30.
step 408: if SGSN 30 determines the direct-tunnel scheme has been started, then the direct-tunnel mark is included into the request message of updating PDP context by the mark setting module in SGSN 30. According to operation business strategy, SGSN 30 determines whether to delete the user plane tunnel information of the double tunnels distributed in the step 402, and sets different values of the direct-tunnel mark using its mark setting module. SGSN 30 sends the value of the direct-tunnel mark along with the address and the user plane tunnel information of RNC 20 in the request message of updating PDP context to GGSN 40;
step 409: after GGSN 40 has received the information above, its mark determining module determines that there is the direct-tunnel mark, and thus GGSN 40 knows that SGSN 30 has started the direct tunnel, and the address and the user plane tunnel information included in the request message are of RNC 20. If the value of the direct-tunnel mark indicates that SGSN 30 has deleted the user plane tunnel information of the double tunnels, then GGSN 40 deletes the stored address and the user plane tunnel information of SGSN 30 as well, so in this case GGSN 40 reserves only the address and the user plane tunnel information of RNC 20; if the value of the direct-tunnel mark indicates that SGSN 30 has reserved the user plane tunnel information of the double tunnels, then GGSN 40 reserves the address and the user plane tunnel information of SGSN 30 as well, so in this case GGSN 40 reserves simultaneously the addresses and the user plane tunnel information of SGSN 30 and RNC 20; if there is no the direct-tunnel mark, then it indicates that SGSN 30 has started a double-tunnel scheme;
step 410: GGSN 40 returns the response of updating PDP context to SGSN 30;
step 411: SGSN 30 returns the response of activating PDP context to a terminal to activate PDP context successfully.

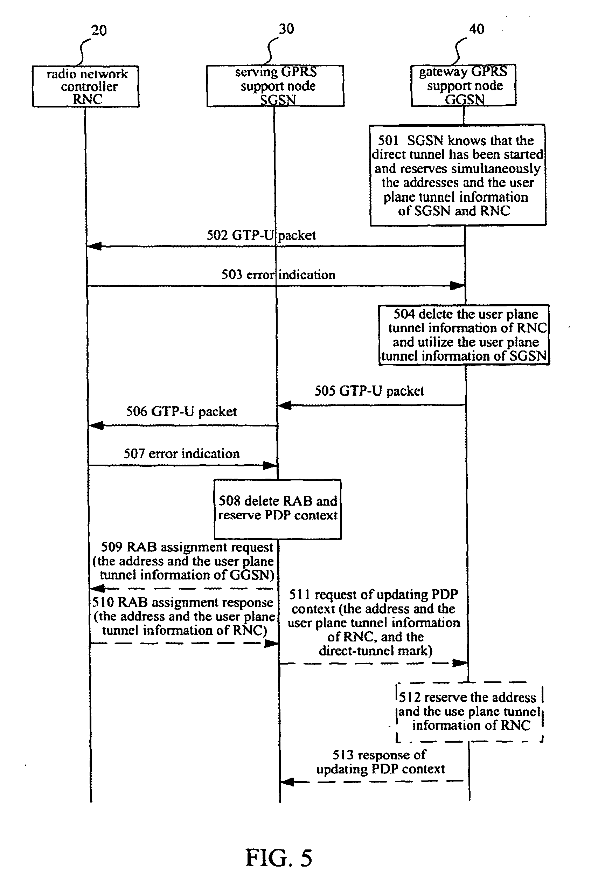

As shown in Fig. 5, one embodiment of a processing procedure when GGSN 40 receives an error indication in accordance with the invention is provided, wherein, when SGSN 30 has started the direct tunnel and reserved the user plane tunnel information of the double tunnels, the GGSN receives an error indication. According to the present invention:
step 501: GGSN 40 knows that the direct tunnel has been started and reserves simultaneously the addresses and the user plane tunnel information of SGSN 30 and RNC 20;
step 502: GGSN 40 sends a downlink packet to RNC 20 through a GTP-U tunnel;
step 503: if abnormity occurs in RNC 20 and the corresponding context cannot be found, an error indication called the first error indication is returned to GGSN 40;
step 504: after GGSN 40 receives the error indication, it knows that the error indication comes from RNC 20, because it knows that the direct tunnel has been started. GGSN 40 deletes the address and the user plane tunnel information of RNC 20, and utilizes the address and user plane tunnel information of SGSN 30. The subsequent steps are the same as those for the double-tunnel scheme.
step 505: when GGSN 40 receives the downlink packet again, it sends the downlink packet to SGSN 30;
step 506: SGSN 30 forward the downlink packet to RNC 20;
step 507: if abnormity occurs in RNC 20 and the corresponding RAB cannot be found, an error indication called the second error indication is returned to SGSN 30;
step 508: after GGSN 30 receives the second error indication, it deletes RAB and reserves PDP context.

The following steps are optional:
step 509: SGSN 30 sends a RAB assignment request message with the address and the user plane tunnel information of GGSN 40 to re-establish the RAB;
step 510: RNC 20 completes the RAB assignment process and distributes tunnel numbers of RNC 20; after this has been done, an RAB assignment response with the address and the distributed user plane tunnel information of RNC 20 is returned to SGSN 30.
step 511: if SGSN 30 determines that the direct-tunnel scheme has been started, then it sends the direct-tunnel mark and the address and the use plane tunnel information of RNC 20 in the request message of updating PDP context to GGSN 40;
step 512: GGSN 40 reserves the address and the use plane tunnel information of RNC 20 after receiving the information mentioned above;
step 513: GGSN 40 returns the response of updating PDP context to SGSN 30.

SGSN 30 re-establishes the direct tunnel between RNC 20 and GGSN 40 with the above steps.

The above description is only the preferred embodiments of the invention and is not intended to limit the scope of the invention; all the equivalence, variation and modification made according to the invention are covered in the scope of the present invention.

### Industrial Applicability

The method and system according to the present invention has eliminated the disadvantage that the GGSN is unable to know whether the SGSN has started the direct tunnel in prior art. In addition, the present invention can determinate whether the SGSN reserves the previously distributed user plane tunnel information and is applied to the third generation mobile communication system including terminals, radio network controller (RNC), serving GPRS support node (SGSN) and gateway GPRS support node (GGSN).

## Claims

1. A method for acquiring that a serving general packet radio service support node has started a direct tunnel by a gateway general packet radio service support node in a packet domain, the method applying to a third generation mobile communication system including terminals, radio network controller, serving general packet radio service support node and gateway general packet radio service support node, comprising the follow steps:
setting mark: in a tunnel establishing process, setting a direct-tunnel mark in a request message of updating packet data protocol context sent to the gateway general packet radio service support node to indicate whether the serving general packet radio service support node has started the direct tunnel if the serving general packet radio service support node has started a direct-tunnel scheme (402);
determining mark: determining the presence of the mark indicating that the serving general packet radio service support node has started the direct tunnel and acquiring an address and user plane tunnel information of the radio network controller included in the request message of updating packet data protocol context if the gateway general packet radio service support node determines that the received request message of updating packet data protocol context has the direct-tunnel mark (403);
**characterized in that**, the step of setting mark comprises setting different values of the direct-tunnel mark according to whether the user plane tunnel information of double tunnels is deleted or reserved if the serving general packet radio service support node has started the direct tunnel.

2. The method according to claim 1, wherein the step of determining mark comprises determining a value of the direct-tunnel mark, wherein if the value of the direct-tunnel mark indicates that the serving general packet radio service support node has deleted the user plane tunnel information of the double tunnels, then the gateway general packet radio service support node deletes the stored user plane tunnel information of the serving general packet radio service support node; and if the value of the direct-tunnel mark indicates that the serving general packet radio service support node has reserved the user plane tunnel information of the double tunnels, then the gateway general packet radio service support node reserves the stored address and the user plane tunnel information of the serving general packet radio service support node (409).

3. The method according to claim 1, wherein after the step of determining mark, when the serving general packet radio service support node has started the direct tunnel and reserved the user plane tunnel information of the double tunnels, the gateway general packet radio service support node receives and processes an error indication sent by the radio network controller.

4. The method according to claim 3, wherein the step of the gateway general packet radio service support node receiving and processing the error indication sent by the radio network controller further comprises:
step 51: the gateway general packet radio service support node sending a downlink packet to the radio network controller through a GTP-U tunnel (502);
step 52: if abnormity occurs in the radio network controller and the corresponding context cannot be found, the radio network controller returning an error indication called a first error indication to the gateway general packet radio service support node (503);
step 53: the gateway general packet radio service support node receiving the first error indication returned by the radio network controller, deleting the address and the user plane tunnel information of the radio network controller, and utilizing the address and the user plane tunnel information of the serving general packet radio service support node (504).

5. The method according to claim 4, wherein after the step 53, the method further comprises:
step 61: the gateway general packet radio service support node receiving the downlink packet again and sending the downlink packet to the serving general packet radio service support node (505), then the serving general packet radio service support node forwarding the downlink packet to the radio network controller (506);
step 62: if abnormity occurs in the radio network controller and the corresponding radio access bearer cannot be found, the radio network controller returning an error indication called a second error indication to the serving general packet radio service support node (507);
step 63: the gateway general packet radio service support node receiving the second error indication returned by the radio network controller, deleting the radio access bearer and reserving the packet data protocol context (508).

6. A third generation mobile communication system for acquiring that a serving general packet radio service support node has started a direct tunnel by a gateway general packet radio service support node in a packet domain, the third generation mobile communication system comprising terminals, radio network controller, serving general packet radio service support node and gateway general packet radio service support node, wherein a mark setting module is added in the serving general packet radio service support node, and a mark determining module is added in the gateway general packet radio service support node, wherein:
the mark setting module in the serving general packet radio service support node is used for setting a direct-tunnel mark in a request message of updating packet data protocol context sent to the gateway general packet radio service support node after starting a direct-tunnel scheme in a tunnel establishing process to indicate whether the serving general packet radio service support node has started the direct tunnel; and
the mark determining module in the gateway general packet radio service support node is used for determining whether the received request message of updating packet data protocol context has the direct-tunnel mark, and if yes, indicating that the serving general packet radio service support node has started the direct tunnel;
**characterized in that**, the mark setting module in the serving general packet radio service support node further sets different values of the direct-tunnel mark according to whether the serving general packet radio service support node has deleted or reserved the user plane tunnel information of double tunnels.

7. The system according to claim 6, wherein the mark determining module in gateway general packet radio service support node further determines whether the serving general packet radio service support node has deleted the user plane tunnel information of the double tunnels according to the value of the direct-tunnel mark.

## Patentansprüche

1. Ein Verfahren zum Erfassen durch einen Gateway-Unterstützungsknoten für einen allgemeinen paketorientierten Funkdienst in einer Paketdomäne, dass ein bedienender Unterstützungsknoten für einen allgemeinen paketorientierten Funkdienst einen direkten Tunnel gestartet hat, wobei das Verfahren ein mobiles Kommunikationssystem der dritten Generation einschließlich Endgeräten, Funknetzsteuerung, bedienendem Unterstützungsknoten für einen allgemeinen paketorientierten Funkdienst und Gateway-Unterstützungsknoten für einen allgemeinen paketorientierten Funkdienst betrifft, die folgenden Schritte beinhaltend:
Einstellen einer Kennzeichnung: in einem Tunneleinrichtungsprozess, Einstellen einer Direkttunnel-Kennzeichnung in einer Anforderungsnachricht zum Aktualisieren von Paketdatenprotokollkontext, die an den Gateway-Unterstützungsknoten für einen allgemeinen paketorientierten Funkdienst gesendet wird, um anzugeben, ob der bedienende Unterstützungsknoten für einen allgemeinen paketorientierten Funkdienst den direkten Tunnel gestartet hat, wenn der bedienende Unterstützungsknoten für einen allgemeinen paketorientierten Funkdienst ein Direkttunnel-Schema gestartet hat (402);
Bestimmen einer Kennzeichnung: Bestimmen des Vorhandenseins der Kennzeichnung, die angibt, dass der bedienende Unterstützungsknoten für einen allgemeinen paketorientierten Funkdienst den direkten Tunnel gestartet hat, und Erfassen einer Adresse und von Nutzerebenentunnelinformationen der Funknetzsteuerung, die in der Anforderungsnachricht zum Aktualisieren von Paketdatenprotokollkontext enthalten sind, wenn der Gateway-Unterstützungsknoten für einen allgemeinen paketorientierten Funkdienst bestimmt, dass die empfangene Anforderungsnachricht zum Aktualisieren von Paketdatenprotokollkontext die Direkttunnel-Kennzeichnung aufweist (403);
**dadurch gekennzeichnet, dass** der Schritt des Einstellens einer Kennzeichnung das Einstellen unterschiedlicher Werte der Direkttunnel-Kennzeichnung je nachdem, ob die Nutzerebenentunnelinformationen von doppelten Tunneln gelöscht oder zurückbehalten sind, wenn der bedienende Unterstützungsknoten für einen allgemeinen paketorientierten Funkdienst den direkten Tunnel gestartet hat, beinhaltet.

2. Verfahren gemäß Anspruch 1, wobei der Schritt des Bestimmens einer Kennzeichnung das Bestimmen eines Wertes der Direkttunnel-Kennzeichnung beinhaltet, wobei, wenn der Wert der Direkttunnel-Kennzeichnung angibt, dass der bedienende Unterstützungsknoten für einen allgemeinen paketorientierten Funkdienst die Nutzerebenentunnelinformationen der doppelten Tunnel gelöscht hat, der Gateway-Unterstützungsknoten für einen allgemeinen paketorientierten Funkdienst dann die gespeicherten Nutzerebenentunnelinformationen des bedienenden Unterstützungsknotens für einen allgemeinen paketorientierten Funkdienst löscht; und, wenn der Wert der Direkttunnel-Kennzeichnung angibt, dass der bedienende Unterstützungsknoten für einen allgemeinen paketorientierten Funkdienst die Nutzerebenentunnelinformationen der doppelten Tunnel zurückbehalten hat, der Gateway-Unterstützungsknoten für einen allgemeinen paketorientierten Funkdienst dann die gespeicherte Adresse und die Nutzerebenentunnelinformationen des bedienenden Unterstützungsknotens für einen allgemeinen paketorientierten Funkdienst zurückbehält (409).

3. Verfahren gemäß Anspruch 1, wobei nach dem Schritt des Bestimmens einer Kennzeichnung, wenn der bedienende Unterstützungsknoten für einen allgemeinen paketorientierten Funkdienst den direkten Tunnel gestartet und die Nutzerebenentunnelinformationen der doppelten Tunnel zurückbehalten hat, der Gateway-Unterstützungsknoten für einen allgemeinen paketorientierten Funkdienst eine von der Funknetzsteuerung gesendete Fehlerangabe empfängt und verarbeitet.

4. Verfahren gemäß Anspruch 3, wobei der Schritt des Empfangens und des Verarbeitens der von der Funknetzsteuerung gesendeten Fehlerangabe durch den Gateway-Unterstützungsknoten für einen allgemeinen paketorientierten Funkdienst ferner Folgendes beinhaltet:
Schritt 51: Der Gateway-Unterstützungsknoten für einen allgemeinen paketorientierten Funkdienst sendet ein Abwärtsverbindungs-Paket durch einen GTP-U-Tunnel an die Funknetzsteuerung (502);
Schritt 52: wenn in der Funknetzsteuerung eine Unregelmäßigkeit auftritt und der entsprechende Kontext nicht gefunden werden kann, sendet die Funknetzsteuerung an den Gateway-Unterstützungsknoten für einen allgemeinen paketorientierten Funkdienst eine Fehlerangabe zurück, die erste Fehlerangabe genannt wird (503);
Schritt 53: der Gateway-Unterstützungsknoten für einen allgemeinen paketorientierten Funkdienst empfängt die von der Funknetzsteuerung zurückgesendete erste Fehlerangabe, löscht die Adresse und die Nutzerebenentunnelinformationen der Funknetzsteuerung und nutzt die Adresse und die Nutzerebenentunnelinformationen des bedienenden Unterstützungsknotens für einen allgemeinen paketorientierten Funkdienst (504).

5. Verfahren gemäß Anspruch 4, wobei das Verfahren nach dem Schritt 53 ferner Folgendes beinhaltet:
Schritt 61: Der Gateway-Unterstützungsknoten für einen allgemeinen paketorientierten Funkdienst empfängt erneut das Abwärtsverbindungs-Paket und sendet das Abwärtsverbindungs-Paket an den bedienenden Unterstützungsknoten für einen allgemeinen paketorientierten Funkdienst (505), dann leitet der bedienende Unterstützungsknoten für einen allgemeinen paketorientierten Funkdienst das Abwärtsverbindungs-Paket an die Funknetzsteuerung weiter (506);
Schritt 62: wenn in der Funknetzsteuerung eine Unregelmäßigkeit auftritt und der entsprechende Funkzugangskanal nicht gefunden werden kann, sendet die Funknetzsteuerung an den bedienenden Unterstützungsknoten für einen allgemeinen paketorientierten Funkdienst eine Fehlerangabe zurück, die zweite Fehlerangabe genannt wird (507);
Schritt 63: der Gateway-Unterstützungsknoten für einen allgemeinen paketorientierten Funkdienst empfängt die zweite Fehlerangabe, die von der Funknetzsteuerung zurückgesendet wird, löscht den Funkzugangskanal und behält den Paketdatenprotokollkontext zurück (508).

6. Ein mobiles Kommunikationssystem der dritten Generation zum Erfassen durch einen Gateway-Unterstützungsknoten für einen allgemeinen paketorientierten Funkdienst in einer Paketdomäne, dass ein bedienender Unterstützungsknoten für einen allgemeinen paketorientierten Funkdienst einen direkten Tunnel gestartet hat, wobei das mobile Kommunikationssystem der dritten Generation Endgeräte, Funknetzsteuerung, bedienenden Unterstützungsknoten für einen allgemeinen paketorientierten Funkdienst und Gateway-Unterstützungsknoten für einen allgemeinen paketorientierten Funkdienst beinhaltet, wobei in dem bedienenden Unterstützungsknoten für einen allgemeinen paketorientierten Funkdienst ein Kennzeichnungseinstellmodul hinzugefügt ist und in dem Gateway-Unterstützungsknoten für einen allgemeinen paketorientierten Funkdienst ein Kennzeichnungsbestimmungsmodul hinzugefügt ist, wobei:
das Kennzeichnungseinstellmodul in dem bedienenden Unterstützungsknoten für einen allgemeinen paketorientierten Funkdienst verwendet wird, um eine Direkttunnel-Kennzeichnung in einer Anforderungsnachricht zum Aktualisieren von Paketdatenprotokollkontext, die an den Gateway-Unterstützungsknoten für einen allgemeinen paketorientierten Funkdienst gesendet wird, einzustellen, nachdem in einem Tunneleinrichtungsprozess ein Direkttunnel-Schema gestartet worden ist, um anzugeben, ob der bedienende Unterstützungsknoten für einen allgemeinen paketorientierten Funkdienst den direkten Tunnel gestartet hat; und
das Kennzeichnungsbestimmungsmodul in dem Gateway-Unterstützungsknoten für einen allgemeinen paketorientierten Funkdienst verwendet wird, um zu bestimmen, ob die empfangene Anforderungsnachricht zum Aktualisieren von Paketdatenprotokollkontext die Direkttunnel-Kennzeichnung aufweist, und, wenn ja, um anzugeben, dass der bedienende Unterstützungsknoten für einen allgemeinen paketorientierten Funkdienst den direkten Tunnel gestartet hat;
**dadurch gekennzeichnet, dass** das Kennzeichnungseinstellmodul in dem bedienenden Unterstützungsknoten für einen allgemeinen paketorientierten Funkdienst ferner unterschiedliche Werte der Direkttunnel-Kennzeichnung einstellt, je nachdem, ob der bedienende Unterstützungsknoten für einen allgemeinen paketorientierten Funkdienst die Nutzerebenentunnelinformationen von doppelten Tunneln gelöscht oder zurückbehalten hat.

7. System gemäß Anspruch 6, wobei das Kennzeichnungseinstellmodul in dem Gateway-Unterstützungsknoten für einen allgemeinen paketorientierten Funkdienst ferner gemäß dem Wert der Direkttunnel-Kennzeichnung bestimmt, ob der bedienende Unterstützungsknoten für einen allgemeinen paketorientierten Funkdienst die Nutzerebenentunnelinformationen der doppelten Tunnel gelöscht hat.

## Revendications

1. Un procédé pour acquérir qu'un noeud de support GPRS (General Packet Radio Service - service général de radiocommunication par paquets) de service a lancé un tunnel direct par un noeud de support GPRS de transit dans un domaine paquet, le procédé s'appliquant à un système de communication mobile de troisième génération comportant des terminaux, un contrôleur de réseau de radiocommunication, un noeud de support GPRS de service et un noeud de support GPRS de transit, comprenant les étapes suivantes :
définition de marque : lors d'un processus d'établissement de tunnel, définition d'une marque de tunnel direct dans un message de demande de mise à jour de contexte PDP (Packet Data Protocol - protocole de données paquet) envoyé au noeud de support GPRS de transit afin d'indiquer si le noeud de support GPRS de service a lancé le tunnel direct si le noeud de support GPRS de service a lancé un schéma de tunnel direct (402) ;
détermination de marque : détermination de la présence de la marque indiquant que le noeud de support GPRS de service a lancé le tunnel direct et acquisition d'une adresse et d'informations de tunnel de plan utilisateur du contrôleur de réseau de radiocommunication incluses dans le message de demande de mise à jour de contexte PDP si le noeud de support GPRS de transit détermine que le message de demande de mise à jour de contexte PDP reçu présente la marque de tunnel direct (403) ;
**caractérisé en ce que** l'étape de définition de marque comprend le fait de définir différentes valeurs de la marque de tunnel direct selon que les informations de tunnel de plan utilisateur de tunnels doubles sont supprimées ou réservées si le noeud de support GPRS de service a lancé le tunnel direct.

2. Le procédé selon la revendication 1, dans lequel l'étape de détermination de marque comprend la détermination d'une valeur de la marque de tunnel direct, dans lequel si la valeur de la marque de tunnel direct indique que le noeud de support GPRS de service a supprimé les informations de tunnel de plan utilisateur des tunnels doubles, alors le noeud de support GPRS de transit supprime les informations de tunnel de plan utilisateur stockées du noeud de support GPRS de service ; et si la valeur de la marque de tunnel direct indique que le noeud de support GPRS de service a réservé les informations de tunnel de plan utilisateur des tunnels doubles, alors le noeud de support GPRS de transit réserve l'adresse et les informations de tunnel de plan utilisateur stockées du noeud de support GPRS de service (409).

3. Le procédé selon la revendication 1, dans lequel après l'étape de détermination de marque, lorsque le noeud de support GPRS de service a lancé le tunnel direct et réservé les informations de tunnel de plan utilisateur des tunnels doubles, le noeud de support GPRS de transit reçoit et traite une indication d'erreur envoyée par le contrôleur de réseau de radiocommunication.

4. Le procédé selon la revendication 3, dans lequel l'étape où le noeud de support GPRS de transit reçoit et traite l'indication d'erreur envoyée par le contrôleur de réseau de radiocommunication comprend en outre :
l'étape 51 où : le noeud de support GPRS de transit envoie un paquet en liaison descendante au contrôleur de réseau de radiocommunication par l'intermédiaire d'un tunnel GTP-U (502) ;
l'étape 52 où : si l'anomalie se produit dans le contrôleur de réseau de radiocommunication et que le contexte correspondant est introuvable, le contrôleur de réseau de radiocommunication renvoie une indication d'erreur appelée première indication d'erreur au noeud de support GPRS de transit (503) ;
l'étape 53 où : le noeud de support GPRS de transit reçoit la première indication d'erreur renvoyée par le contrôleur de réseau de radiocommunication, supprime l'adresse et les informations de tunnel de plan utilisateur du contrôleur de réseau de radiocommunication, et utilise l'adresse et les informations de tunnel de plan utilisateur du noeud de support GPRS de service (504).

5. Le procédé selon la revendication 4, dans lequel après l'étape 53, le procédé comprend en outre :
l'étape 61 où : le noeud de support GPRS de transit reçoit de nouveau le paquet en liaison descendante et envoie le paquet en liaison descendante au noeud de support GPRS de service (505), puis le noeud de support GPRS de service retransmet le paquet en liaison descendante au contrôleur de réseau de radiocommunication (506) ;
l'étape 62 où : si l'anomalie se produit dans le contrôleur de réseau de radiocommunication et que le support d'accès radio correspondant est introuvable, le contrôleur de réseau de radiocommunication renvoie une indication d'erreur appelée deuxième indication d'erreur au noeud de support GPRS de service (507) ;
l'étape 63 où : le noeud de support GPRS de transit reçoit la deuxième indication d'erreur renvoyée par le contrôleur de réseau de radiocommunication, supprime le support d'accès radio et réserve le contexte PDP (508).

6. Un système de communication mobile de troisième génération pour acquérir qu'un noeud de support GPRS de service a lancé un tunnel direct par un noeud de support GPRS de transit dans un domaine paquet, le système de communication mobile de troisième génération comprenant des terminaux, un contrôleur de réseau de radiocommunication, un noeud de support GPRS de service et un noeud de support GPRS de transit, un module de définition de marque étant ajouté dans le noeud de support GPRS de service, et un module de détermination de marque étant ajouté dans le noeud de support GPRS de transit, dans lequel :
le module de définition de marque dans le noeud de support GPRS de service est utilisé pour définir une marque de tunnel direct dans un message de demande de mise à jour de contexte PDP envoyé au noeud de support GPRS de transit après le lancement d'un schéma de tunnel direct lors d'un processus d'établissement de tunnel afin d'indiquer si le noeud de support GPRS de service a lancé le tunnel direct ; et
le module de détermination de marque dans le noeud de support GPRS de transit est utilisé pour déterminer si le message de demande de mise à jour de contexte PDP reçu présente la marque de tunnel direct et, si c'est le cas, indiquer que le noeud de support GPRS de service a lancé le tunnel direct ;
**caractérisé en ce que** le module de définition de marque dans le noeud de support GPRS de service définit qui plus est différentes valeurs de la marque de tunnel direct selon que le noeud de support GPRS de service a supprimé ou réservé les informations de tunnel de plan utilisateur de tunnels doubles.

7. Le système selon la revendication 6, dans lequel le module de détermination de marque dans le noeud de support GPRS de transit détermine qui plus est si le noeud de support GPRS de service a supprimé les informations de tunnel de plan utilisateur des tunnels doubles selon la valeur de la marque de tunnel direct.
